# EUROPEAN PATENT APPLICATION

(11) **EP 1 043 879 A2**
(43) Date of publication of application: **11.10.2000**
(21) Application number: 00107271.9
(22) Date of filing: 04.04.2000
(51) Int. Cl.: H04M 1/05, H04M 1/737

(54) **Infrared transmission communication system**

(30) Priority: 05.04.1999 US 286381
(71) Applicant: PHONIC EAR, INC., Petaluma, CA 94954-7600 (US)
(72) Inventor: Lam, Keith, c/o Phonic Ear Inc., Petaluma, CA 94954-7600 (US); Ho, Yvonne, c/o Phonic Ear Inc., Petaluma, CA 94954-7600 (US); Danehy, Lynn, c/o Phonic Ear Inc., Petaluma, CA 94954-7600 (US)
(74) Representative: Christensen, Mikael T.

(57) **Abstract**

The invention relates to a communication system for infrared transmission of a signal from a freely movable speaker to a sound reproducing system, the communication system comprising a microphone; at least one IR emitter; a receiver and end transmission equipment, where the microphone form part of a single portable unit suitable for placement on a wearers head and where the microphone is placed in a fixed position in relation to the wearers head and at least one emitter is placed in a position primarily above the wearers head. The invention further relates to a headset for use in such system.

## Description

### BACKGROUND OF THE INVENTION

The invention relates to infrared transmission communication systems. Such systems are well known within the art of communicating a signal from a transmitter to a receiver.

A previously known system comprises a stationary microphone for transforming an acoustical signal to an electrical signal, which is modulated for infrared transmission in modulating electronics. These electronics are connected to a stationary IR emitter, which transmits the modulated signal. An IR receiver, e.g. in the form of a headset, is provided at each of the persons in the environment desiring to receive the emitted signal. The received signal is demodulated in demodulating electronics and transferred to the earphones of the headset. The receivers and connected demodulating electronics may be connected to various other types of transmission equipment, such as loudspeakers.

It is obvious that such system will only provide a satisfying functionality in the situation where the speaker is in a stationary position, meaning that such systems may be sufficient for conference purposes. However a number of situations may be set forth where the stationary system is insufficient, due to the speakers need of moving into different positions. One very important situation is the education situation in schools, universities and similar.

Due to the above-mentioned disadvantages the education environment has until recently only been able to use radio frequency transmission systems. Such systems has a significant functionality, however since the signal may travel beyond the limitations of the classroom in the school there is a need of using a different transmission frequency for each classroom. This means that such systems may have limitations of use where the required frequencies cannot be provided and furthermore that the transmitter and receivers have to be tuned to the same frequency, which may cause some trouble in case a significant number of different frequencies are used.

Compared to the radio frequency transmission systems the IR transmission systems have the advantage of not being able to transmit a signal beyond the physical limitations of the environment, i.e. the walls, the floor and the ceiling, meaning that the same transmission frequency may be used in adjacent class rooms in a school.

In order to remedy the disadvantages of the previously known stationary IR transmission systems as mentioned above, systems have been introduced, which comprises a portable microphone and a portable infrared emitter. The emitter transmits a signal, which is received by a stationary receiver. The signal is afterwards processed and transmitted to stationary loudspeakers. The portable microphone and emitter normally are arranged as neckbands or clip on units meaning that the microphone and the emitter are adapted to be placed in front of the body of the user. In connection with the microphone this means that the often occurring movements of the speakers head in many positions will provide an insufficient input due to variations in sound pressure level and therefor a similar insufficient output. In connection with the IR emitter this type of mounting means that that the body of the speaker may block the emitter in relation to the receiver when the speakers body is in between the emitter and the receiver hereby possibly blocking the signal. These two disadvantages mean that the IR communication systems in many situations have had an insufficient functionality in connection with non-stationary speakers.

Furthermore a system is known, which comprises a handheld microphone/emitter unit. This means that the speaker is unable to use both hands and at the same time hold the microphone in a correct position. This is inconvenient in many situations, i.e. in an education environment.

Therefore there is a need of improving such infrared transmission systems for use by non-stationary speakers.

In one aspect the objective of the present invention is to provide a system which improves the communication between the emitter and receiver by reducing the blocking by the speaker of the emitter in relation to the receiver. Another objective is to provide a system, which allows the speaker to move his/her head from side to side without influencing the microphone input signal significantly. A further objective is to provide a system, which allows the speaker to use both hands simultaneously with the speaking. In another aspect the objective of the present invention is to provide a headset for use in connection with an IR communication system, which improves the communication between the emitter and receiver in such systems by reducing the speaker from blocking the IR emitter in relation to the receiver. Another objective is to provide a headset, which provides the advantages of allowing the speaker to move his/her head from side to side without influencing the microphone input signal significantly. A further objective is to provide a headset, which allows the speaker to use both hands simultaneously with the speaking.

### SUMMARY OF THE INVENTION

According to the invention this is achieved by means of a system comprising: a microphone; modulating electronics in connection with the microphone; at least one IR emitting unit in connection with the modulating electronics; a receiver; demodulating electronics in connection with the receiver and end transmission equipment in connection with the modulating electronics; where the microphone and the IR emitting unit form part of a single portable unit suitable for placement on a wearers head, where the microphone is placed in a fixed position in relation to the wearers head and at least one emitter is placed in a position at the level of the wearers head.

Since the microphone is placed in a fixed position in relation to the wearers head it is possible to provide the optimal positioning in front of the wearers mouth hereby being able to provide a proper microphone input signal independent of the position of the wearers head. Due to the positioning of the IR emitter at head level, the blocking of the emitter in relation to the receiver by the body of the wearer will be prevented to the widest possible extent. As the microphone and the emitter form part of a single unit the two devices are put on in a single operation which facilitates the use of the system.

Preferably at least one receiver is located at a height essentially above the head of the wearer. Hereby the blocking of the IR signal is further avoided. The end transmission equipment may comprise loudspeakers or loudspeaker headsets. An amplifier may be provided in connection with the end transmission equipment.

In a preferred embodiment the single unit comprises a first part on which the emitter(s) is/are placed and a second part being pivotal in relation to the first part at two locations and which in a first position and having a smaller length between these two points compared to the first part. Hereby the second part will when aligned with the first part abut the wearers head prior to the first part hereby ensuring that the first part is distanced from the wearers head and hereby avoiding a possible interference of the wearer's hair with the emitter signal, which interference could weaken the signal. In a second position where the second part is pivoted in relation to the first part the second part provides a support of the unit against the wearers head at a distance from the first part hereby providing a more stable positioning of the unit.

Preferably the microphone is mounted on a boom connected to the first and the second parts. Preferably the boom is adapted to be adjustable, e.g. pivotal, in relation to the first and/or the second parts.

Preferably at least two IR emitting means are provided. Preferably these two means are positioned to cover different transmission areas. This provides for an improved coverage of the transmission area.

In a preferred embodiment the two IR emitting means are electrically connected in parallel. This provides for reduced power consumption. Furthermore the failure of one emitting means will not disable the system totally, as the second emitter will provide backup.

In a still further preferred embodiment four IR emitting means are provided and where all of these are electrically connected in parallel. This provides for further improved reliability as both the area coverage and the backup function is present.

The IR emitter is preferably placed in a position above the wearers head. In this way the blocking of the IR transmission is further avoided.

According to the invention a headset for use in a infrared transmission communication system is provided, which headset comprises a single unit having a microphone mounted to be positioned in front of the wearers mouth and at least one IR emitter mounted to be positioned at the level of the wearers head.

In a preferred embodiment the single unit has a first part on which the emitter is placed and a second part being pivotal in relation to the first part at two locations and which has an increased length between these two locations compared to the first part.

The microphone is preferably mounted on a boom connected to one of the two parts or possibly both. The boom is preferably adapted to be adjustable, e.g. by means of pivotal joints or hinges or in the form of a flexible material substantially without memory.

In a preferred embodiment the microphone is mounted on a boom connected to at least one of the first and the second parts. The boom is advantageously adapted to be adjustable in relation to the first and the second parts.

Preferably at least two IR emitting means are provided. The two IR emitting means are advantageously electrically connected in parallel. Preferably these two IR emitting means are positioned to cover different transmission areas. Further advantageous is it when four IR emitting means are provided. These IR emitting means are preferably electrically connected in parallel.

Preferably the IR emitting means is/are provided in a position above the wearers head, hereby further avoiding the blocking of the signal.

### BRIEF DESCRIPTION OF THE DRAWINGS

FIG. 1 is a schematic diagram showing a communication system according to the invention;
FIG. 2 is a front view of a microphone/emitter unit according to the invention;
FIG. 3 is a perspective view of a microphone/emitter unit according to the invention.

### DESCRIPTION OF THE PREFERRED EMBODIMENT

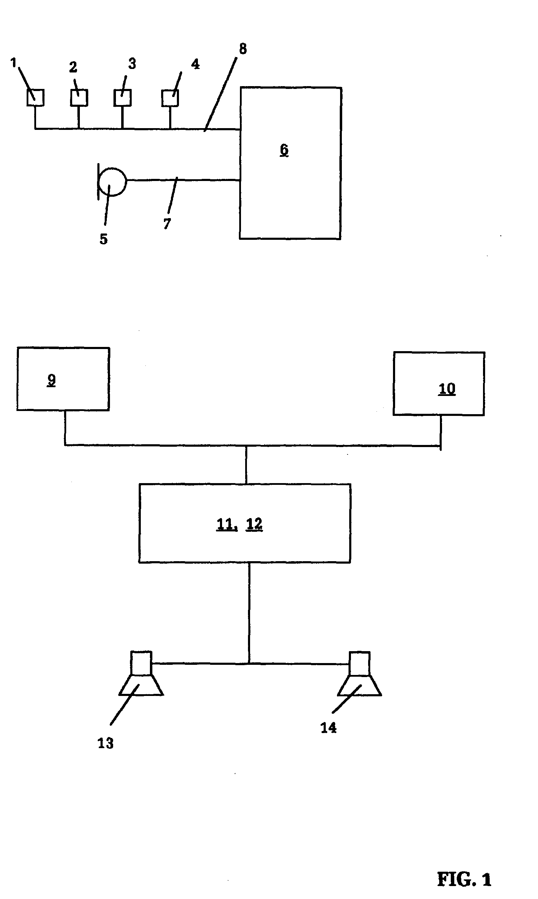

From FIG. 1 a communication system appears, which comprises a speaker side system and a listener side system.

The speaker side system comprises a headset formed as a single unit and comprising a microphone 5 and four infrared (IR) emitting LED's 1,2,3,4. The microphone converts an acoustical signal into an electrical signal. The microphone output signal is transferred to a modulating system 6 through a wire 7 and after modulation the signal is transferred from the modulating system through the wires 8 to the LED's which emit the infrared modulated signal towards the listener side system. The speaker side system is powered by batteries.

The listener side system comprises two receivers 9,10 for receiving the infrared output signal from the LED's (further receivers may be provided), a demodulating system 11 for demodulating the received modulated signal, an amplifier 12 and a number of speakers 13,14 as end transmission equipment for outputting the received, demodulated and possibly amplified signal. The listener side system may be powered either by batteries or by any other available electrical power source.

The modulating and demodulating electronics are well known within the art of IR transmission.

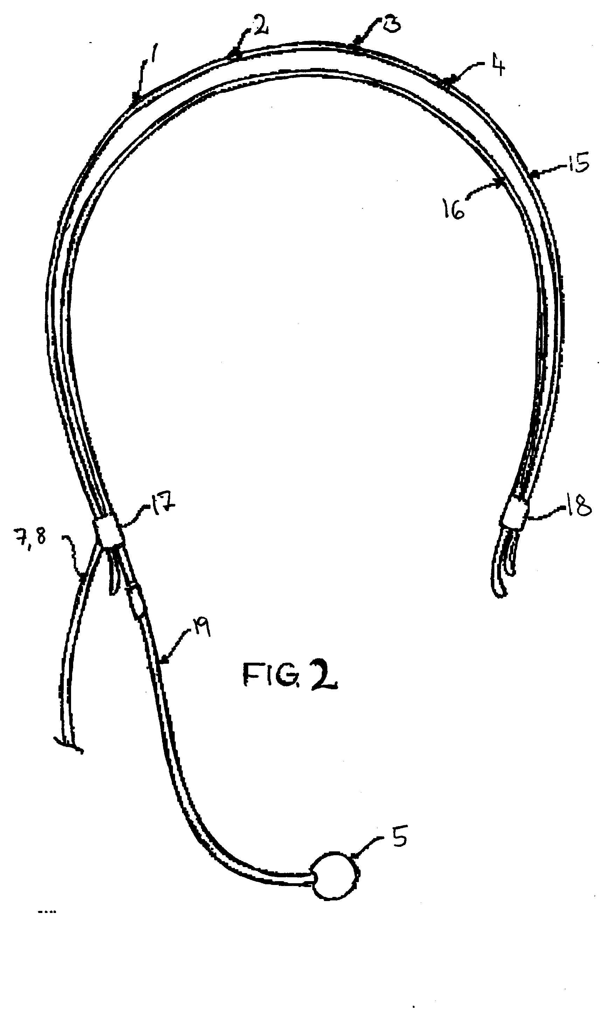

From FIG. 2 a headset according to the invention appears in a front view. It appears that the headset comprises two headbands 15,16, which are mutually pivotally connected at two distanced locations. The two headbands are connected by hinges 17,18 at these locations, allowing the mutual pivoting of the two headbands. The first headband has an increased length between the mutual connection locations compared to the second headband. The LED's 1,2,3,4 are mounted on the first headband 15. The difference in length of the two headbands will when the two headbands are aligned or approximately aligned provide for the abutment of the second 16 headband against the wearers head prior to an abutment of the first headband 15 when the headset is mounted, meaning that the first headband has a distance to the wearers head hereby preventing the wearers hair to interfere with the emitting from the LED's.

In the pivoted position of the second headband 16 in relation to the first headband 15, the second headband will provide an improved support for the headset against the sides of the head.

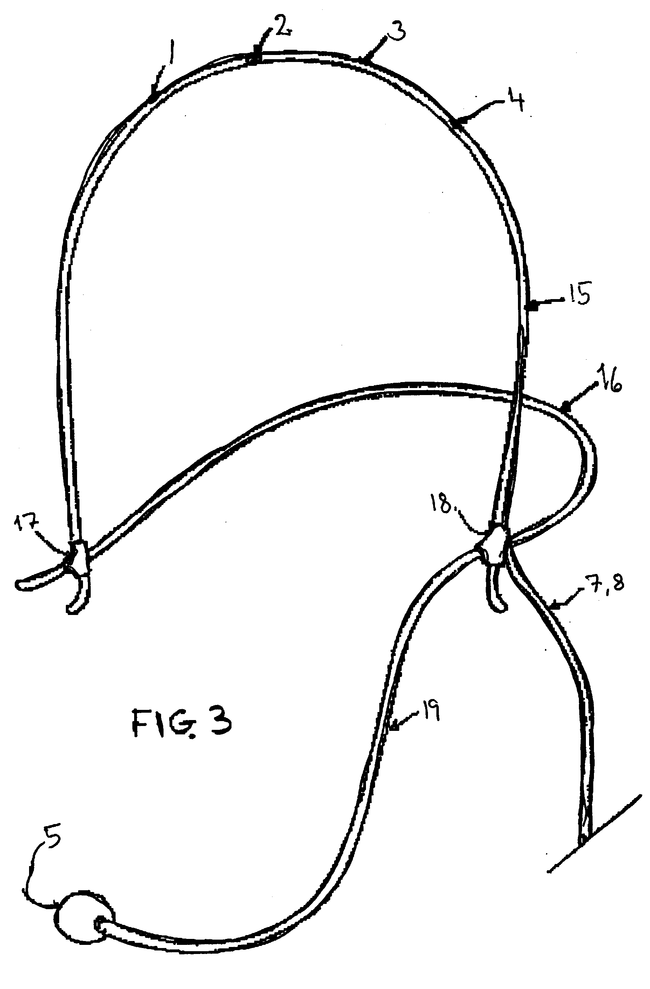

From FIG. 3 a headset according to the invention appears in a perspective view where the second headband is in the pivoted position supported by the head.

It appears from both FIG. 2 and FIG. 3 that the microphone 5 is mounted on a boom 19 extending from the headband meaning that the microphone may always be positioned optimally in relation to the wearer's mouth. The boom is for this purpose made from a flexible material or is provided with hinges that allow adjustment of the microphone position. The four LED's are mounted in a manner where two of these are directed forward and two of these are directed backward. Hereby an increased coverage of the areas around the wearer of the headset is obtained, resulting in a reduced risk of a possibly weak signal at the receivers. The LED's are all electrically mounted in parallel in order to reduce the power consumption.

## Claims

1. A communication system comprising:
- a microphone;
- modulating electronics in connection with the microphone;
- at least one IR emitting means in connection with the modulating electronics and adapted for transmitting IR signals;
- at least one receiver for receiving IR transmitted signals;
- demodulating electronics in connection with at least one receiver and
- end transmission equipment in connection with the demodulating electronics;
- where the microphone and the IR emitting unit form part of a single portable unit suitable for placement on a wearers head;
- where the microphone is placed in a fixed position in relation to the wearers head and at least one emitter is placed in a position at the level of the wearers head.

2. A system according to claim 1, where the single unit comprises a first part on which the emitter is placed and a second part being pivotal in relation to the first part at two locations and which has smaller length between these two locations compared to the first part.

3. A system according to claim 1, where the microphone is mounted on a boom connected to at least one of the first and the second parts.

4. A system according to claim 3, where the boom is adapted to be adjustable in relation to the first and the second parts.

5. A system according to claim 1, where at least two IR emitting means are provided.

6. A system according to claim 5, where the two IR emitting means are electrically connected in parallel.

7. A system according to claim 1, where at least two IR emitting means are provided and where these two means are positioned to cover different transmission areas.

8. A system according to claim 1, where four IR emitting means are provided.

9. A system according to claim 8, where the IR emitting means are electrically connected in parallel.

10. A system according to claim 1 , where at least one IR emitting means is provided above the wearers head.

11. A headset for use in an infrared transmission communication system, the headset comprising a single unit having a microphone mounted to be positioned in front of the wearers mouth and having at least one IR emitter mounted to be positioned above the wearers head.

12. A headset according to claim 11, comprising a single unit having a first part on which the emitter is placed and a second part being pivotal in relation to the first part at two locations and which has smaller length between these two locations compared to the first part.

13. A headset according to claim 11, where the microphone is mounted on a boom connected to at least one of the first and the second parts.

14. A headset according to claim 11, where the boom is adapted to be adjustable in relation to the first and the second parts.

15. A headset according to claim 11, where at least two IR emitting means are provided.

16. A headset according to claim 15, where the two IR emitting means are electrically connected in parallel.

17. A headset according to claim 11, where at least two IR emitting means are provided and where these two means are positioned to cover different transmission areas.

18. A headset according to claim 11, where four IR emitting means are provided.

19. A headset according to claim 18, where all the IR emitting means are electrically connected in parallel.

20. A headset according to claim 11, where at least one IR emitting means is provided in a position above the wearers head.
